# EUROPEAN PATENT SPECIFICATION

(11) **EP 0 681 175 B1**
(45) Date of publication and mention of the grant of the patent: **17.10.2001**
(21) Application number: 95106740.4
(22) Date of filing: 04.05.1995
(51) Int. Cl.: G01N 3/08, G01M 11/08

(54) **Method for the measurement of the viscoelastic properties of polymeric coatings of optical fibers**
Verfahren zur Messung der viskoelastischen Eigenschaften der polymerischen Beschichtungen von optischen Fasern
Méthode pour la mesure des propriétés viscoélastiques des revêtements polymères des fibres optiques

(30) Priority: 05.05.1994 IT TO940363
(43) Date of publication of application: 08.11.1995
(73) Proprietor: Agilent Technologies, Inc. (a Delaware corporation), Palo Alto, CA 94303 (US)
(72) Inventor: Chiaro, Luisella, Caluso (Torino) (IT); Grego, Giorgio, S. Francesco Al Campo (Torino) (IT); Regio, Paola, Castiglione Torinese (Torino) (US)
(74) Representative: Riederer Freiherr von Paar zu Schönau, Anton

(56) References cited:
- EP-A- 0 323 635
- GB-A- 2 104 225
- PATENT ABSTRACTS OF JAPAN vol. 015 no. 088 (P-1174) ,4 March 1991 & JP-A-02 304335 (FUJIKURA LTD) 18 December 1990,
- JOURNAL OF LIGHTWAVE TECHNOLOGY, DEC. 1993, USA, vol. 11, ISSN 0733-8724, pages 1905-1913, SUHIR E 'Interfacial shearing stress in pull-out testing of dual-coated lightguide specimens'
- EFOC/LAN 90. THE EIGHTH EUROPEAN FIBRE OPTIC COMMUNICATION AND LOCAL AREA NETWORKS EXPOSITION. EFOC PROCEEDINGS, MUNICH, WEST GERMANY, 27-29 JUNE 1990, 1990, BASEL, SWITZERLAND, IGI EUROPE, SWITZERLAND, pages 77-80, ANELLI P ET AL 'Measurements of some physical characteristics of the coating for optical fibres'
- APPLIED OPTICS, vol. 29, no. 18, pages 2682-2685, XP 000134523 EPHRAIM SUHIR 'BUFFERING EFFECT OF FIBER COATING AND ITS INFLUENCE ON THE PROOF TEST LOAD IN OPTICAL FIBERS'

## Description

The invention described herein relates to systems for characterization of fiber materials and in particular it concerns a method for measuring the viscoelastic properties of polymeric coatings of optical fibers for telecommunications.

As is well known, optical fibers are coated during drawing with a polymeric coating intended to protect them from the outside environment. Such a coating comprises, in general, two layers: an inner layer (primary coating), which is relatively soft, and an outer layer (secondary coating) which is more rigid. This structure allows protecting the fiber itself from chemical agents and mechanical actions, which could alter its characteristics, e.g. induce attenuations due to microfractures, or even cause the fiber to break. However, the coating itself has an influence on the overall behavior of the fiber from the optical and mechanical point of view. This influence depends not only on the type of coating material, but also on the coating application and polymerization processes. To fully characterize the fiber, it is therefore important to know the characteristics of the coating, and in particular the viscoelastic ones (viscous modulus, elastic modulus, glass transition temperature...).

The techniques proposed until now to determine these characteristics are based on the analysis of the behavior of isolated, film-shaped polymer samples. The characterization of optical fiber coatings using these techniques is described, for instance, in the papers "Designing an optical fiber dual coating system for loose tube and ribbon cable long line and local loop applications", by R. J. Overton et al., Proceedings of 42nd International Wire and Cable Symposium, pages 701-707, and "Rheological Characterization of Coatings for Fabrics and Fibers", by C. L. Rohn, Clemson University Conference on Coated Fabrics, 2-3 May 1989, Clemson (USA), paper number 671.

In these methods, the sample undergoes a periodically variable deformation, applied by means of a suitable instrument (rheometer), and the resistant torque is measured. From the measured quantity, the elastic modulus, the viscous modulus, the glass transition temperature, etc., of the sample are calculated; by extrapolating the data thus found, the behavior with time of the coated fiber is determined.

It is clear that, due to the different geometric characteristics, the response of a film to a mechanical deformation is very different from that of a cylinder, in particular because of the existence in the former case of boundary effects. Moreover, this type of measurement does not take into account the influence of the fiber on the coating due to adhesion forces. Simple extrapolation of the measurements on the isolated sample is not sufficient to provide reliable data on the behavior of a coating in operating conditions.

From EP-A-0 323 635 a plastic-coated optical transmission fibre and a method for estimating the tightness between a glass fibre and the coating material of that fibre are known. Therein, the whole fibre is subjected to a deformation, by holding the fibre at its ends by a vibration chuck and a detection chuck respectively, applying an acoustic wave to the end surface of the coated fibre and measuring the fibre vibrations at the other fibre end surface. The whole of the coated fibre, i. e. glass plus coatings, is excited, and the response is essentially determined by the glass part, which has a Young modulus far higher than that of the coating, and not by the coating itself. Thus information about the whole of the fibre is obtained and not information about the coating only.

Patent Abstracts of Japan/JP-A-02 304 335 discloses that a coated portion of a fibre is fixed by means of an adhesive in a V-groove of a retaining member and that the bare fibre is subjected to a drawing force which can result in its sliding with respect to the coating. The viscoelastic characteristic of the coating of the optical fibre can not be derived therefrom.

Document P. Anelli et al. "Measurement of Some Physical Characteristics of the Coating for Optical Fibers", VII European Fibre Optics Comm. and Local Area Network Exposition, June 27-29 1990, pp 77-80 discloses a device for measuring the elastic properties of the coating of optical fibres, in which the coating alone is clamped between two clamps, and subject to a constant stress component to which an oscillation amplitude is superimposed.

Thus, also these prior arts do not assist the person skilled in the art to measure the viscoelastic characteristics of the coating in operation conditions.

According to the present invention, a method is provided for the measurement of the viscoelastic characteristics of polymeric coatings of optical fibers, which allows the measurement to be performed on the final product, i.e. on the coated fiber, and thus in operating conditions.

According to the invention, a method of measuring the viscoelastic characteristics of the polymeric coating of a coated optical fibre is provided, the fibre comprising an essentially rigid central part and said coating which is arranged around the central part, wherein the ends of a span of the coated fibre are inserted into a pair of engaging elements and an oscillation motion is imparted to at least one of the engaging elements, while the resistant force in the optical fibre is measured and the desired characteristics are obtained from the resistant force, the method being characterized in that:
- the coating is engaged at the ends of the coated fibre span by a pair of clamping elements arranged to engage the coating without tearing it while allowing it to slide over the rigid central part;
- a tensile pre-stress is applied to the coating; and
- the coating, by the oscillation motion imparted to the clamping elements, is subjected to a tensile stress whose intensity periodically varies about the value of the pre-stress and has an amplitude so as to always maintain the coating under tension.

Such method can be carried out by a device which is part of an apparatus comprising means for measuring the viscoelastic characteristics of the polymeric coating of a coated optical fibre comprising an essentially rigid central part and the coating slidably arranged around the central part, the device comprising: a pair of engaging elements adapted to receive the ends of a span of the coated fibre and associated to an oscillation motion driver for imparting an oscillation motion to at least one of the engaging elements, a measuring means for measuring the resistant force in the optical fibre, and a data precessing device arranged to determine the desired viscoelastic characteristics starting from the measured resistant force, wherein the engaging elements are a pair of clamping elements arranged to engage the coating without tearing it while allowing it to slide over the rigid central part, and means are provided for applying a tensile pre-stress to the coating.

For further clarification, reference is made to the enclosed drawings, where:
- fig. 1 is an outline of a device suitable for carrying out the method of the invention;
- fig. 2 is a section of a clamp;
- fig. 3 is an enlarged view of the groove of the clamp and of the fiber;
- fig. 4 is an enlarged view of a variant embodiment of the clamp in fig. 2.

The device which performs the method according to the invention is incorporated into a rheometer, i.e. an apparatus that obtains the viscoelastic characteristics of a material starting from the values of the resistant torque exerted by a sample of material undergoing a periodic deformation. For example, the apparatus to which this invention has been applied is the one sold under the name RDA-2 by Rheometrics, Inc., of Piscataway (N.J., USA). The complete description of the apparatus is not necessary to understand the invention.

The device comprises essentially a pair of clamps 1, 2 in which there are held the ends of a fiber span 3 equipped with a coating whose viscoelastic characteristics need to be determined, and means for imparting an oscillatory motion to one of the clamps 1, 2 to subject fiber 3 to a longitudinal oscillatory deformation. The means for imparting the oscillatory motion to the clamp depend on the type of rheometer and/or on the type of accessories it is equipped with. For example, the aforesaid apparatus is provided with a pair of arms 4, 5 one of which (e.g. arm 4) is fixed whilst the other one is rotatable around a vertical axis, in either direction; as indicated by arrow F. In an exemplary embodiment of the invention, the rotation angles imparted to arm 5 were of the order of a fraction of a degree. Clamps 1, 2 are pivotally mounted by means of pivots 6, 7 at the ends of said arms: by this arrangement, the angular displacements of arm 5 are transformed into linear displacements of clamp 2. Reference 8 represents the fixed part of the rheometer carrying arms 4, 5.

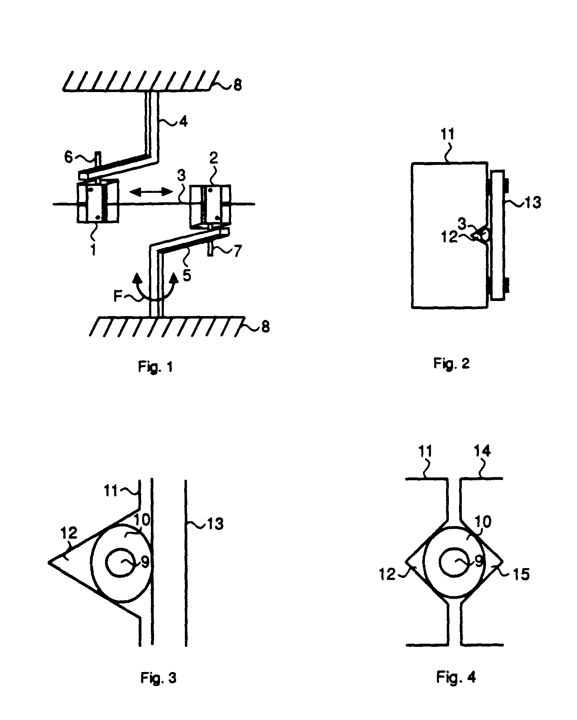

As can be seen in Figure 3, from the mechanical point of view fiber 3 can be seen as the set of an essentially rigid central part 9 (comprising the core and the cladding made of silica or other material used for optical fibers, and hereinafter called for the sake of simplicity "the silica") and an outer part 10 which is partially elastic ("the coating"), though in reality, as mentioned above, coating 10 comprises in general two layers having different characteristics. Fiber span 3 between the two clamps may have a length of a few centimeters, e.g. about 2 cm. Clamps 1, 2 must be such as to engage coating 10 without tearing it, allowing it at the same time to slide longitudinally over silica 9. For example, as can be seen in Figures 2 and 3, a clamp may include a body 11 with a V-shaped groove 12 into which coated fiber 3 is introduced and a holding plate 13 which retains coated fiber 3 in groove 12. By this arrangement, by suitably choosing the dimensions of the groove, it is possible to apply to fiber 3 a compression stress which is distributed on three points of the outer circumference of the fiber and which causes a deformation only in coating 10.

To carry out the measurements, fiber 3 is fixed between clamps 1, 2, and arm 5 is rotated by such an angle as to subject the fiber itself to a pre-stress, e.g. of the order of 1 N. Subsequently, arm 5 is made to oscillate to impart to clamp 2 an oscillatory motion of suitable frequency (e.g. a few Hertz) and of such an amplitude as to always maintain the fiber under tension, to cause, in the fiber, a nearly longitudinal oscillatory deformation which, given the forces involved, in practice interests only the coating. For instance, the amplitude of the oscillation of the force applied to the fiber to obtain the deformation may be a few tenths of a Newton. The instrument measures the opposing torque and the data processing programs contained in it (Rhios software) derive from the opposing torque the values of the quantities of interest, for example elastic modulus G', viscous modulus G", the phase difference between deformation and measured stress, of which the tangent corresponds to ratio G"/G'. The relationships linking such quantities to the measured torque are well known and are reported for example in the above mentioned paper by C. L. Rohn.

As previously stated, the deformation has to occur in a linear viscoelastic region of the coating material, since only in this region the correlation between the measured torque and the various quantities can be established. Therefore, before subjecting the fiber to the oscillatory deformation, it is necessary to identify such region: this can easily be accomplished by carrying out measurements with different deformations and at different temperatures.

Depending on the measurements to carry out, the frequency and/or the amplitude of the oscillations can be varied and, for a given deformation applied, a temperature scanning can be performed to determine the glass transition temperature.

It is evident that what is described herein is given solely by way of non-limiting example and that variations and modifications are possible. For example, as can be seen in Fig. 4, holding plate 13 may be replaced by a second block 14 identical to the first and provided with its own groove 15, opposite to groove 12: in this case, grooves 12, 15 will be shaped so that their walls apply the compression to coating 10. Further, clamps 1, 2 may be realized by means of jaw-type devices, or they may be fixed on supports moving with relative oscillatory motion.

## Claims

1. Method of measuring the viscoelastic characteristics of the polymeric coating (10) of a coated optical fibre (3) comprising an essentially rigid central part (9) and said coating (10) arranged around the central part, wherein the ends of a span (3) of the coated fibre are inserted into a pair of engaging elements (1, 2) and an oscillation motion is imparted to at least one of the engaging elements, while the resistant force in the optical fibre is measured and the desired characteristics are obtained from the resistant force,
**characterized in that**:
- the coating (10) is engaged at the ends of the coated fibre span (3) by a pair of clamping elements (1, 2) arranged to engage the coating (10) without tearing it while allowing it to slide over the rigid central part (9);
- a tensile pre-stress is applied to the coating (10); and
- the coating (10), by the oscillation motion imparted to the clamping elements (1, 2), is subjected to a tensile stress whose intensity periodically varies about the value of the pre-stress and has an amplitude so as to always maintain the coating under tension.

2. Method according to claim 1, **characterized in that** the interval of variation of said intensity is such as to always keep the coating (10) under a tensile stress which is within the linear viscoelastic region of the material of the coating (10).

## Patentansprüche

1. Verfahren zum Messen der viskoelastischen Charakteristiken der polymeren Hülle (10) einer umhüllten Lichtleitfaser (3), die einen im wesentlichen steifen zentralen Teil (9) und die Hülle (10), die um den zentralen Teil herum angeordnet ist, umfaßt; bei dem man die Enden eines Längenabschnitts (3) der umhüllten Faser in zwei Greifelemente (1,2) einsetzt und wenigstens eines der Greifelemente einer Oszillationsbewegung unterwirft, die entgegenwirkende Kraft in der Lichtleitfaser mißt und aus der entgegenwirkenden Kraft die gewünschten Charakteristiken ermittelt, **dadurch gekennzeichnet, daß** man:
- die Hülle an den Enden des Längenabschnitts (3) der umhüllten Faser durch zwei Klammerungselemente (1, 2) ergreift, die gemäß ihrer Konstruktion an der Hülle (10) angreifen können, ohne sie zu zerreißen, und gleichzeitig deren Gleiten auf dem steifen zentralen Teil (9) ermöglichen;
- an die Hülle (10) eine Zug-Vorbelastung anlegt; und
- durch die den Klammerungselementen (1,2) auferlegte Schwingungsbewegung die Hülle (10) einer Zugbelastung unterwirft, deren Stärke sich periodisch um den Wert der Vorbelastung herum ändert und eine solche Amplitude hat, daß die Hülle stets unter Zug gehalten wird.

2. Verfahren nach Anspruch 1, **dadurch gekennzeichnet, daß** man die Stärke in einem solchen Intervall ändert, daß die Hülle (10) immer unter einer Zugbelastung gehalten wird, die innerhalb des linearen viskoelastischen Bereichs des Hüllenmaterials liegt.

## Revendications

1. Procédé pour mesurer les caractéristiques viscoélastiques du revêtement polymère (10) d'une fibre optique revêtue (3) comprenant une partie centrale essentiellement rigide (9) et ledit revêtement (10) étant disposé autour de la partie centrale, dans lequel les extrémités d'une portée (3) de la fibre revêtue sont insérées dans une paire d'éléments d'accrochage (1, 2) et un mouvement oscillant est transmis à au moins un des éléments d'accrochage, alors que la force résistante dans la fibre optique est mesurée et les caractéristiques souhaitées sont obtenues à partir de la force résistante,
**caractérisé en ce que:**
- le revêtement (10) est accroché aux extrémités de la portée de la fibre revêtue (3) par une paire d'éléments de serrage (1, 2) disposés pour accrocher le revêtement (10) sans le déchirer tout en le laissant coulisser sur la partie centrale rigide (9);
- une pré-contrainte de tension est appliquée au revêtement (10); et
- le revêtement (10), par le mouvement oscillant transmis aux éléments de serrage (1, 2), est soumis à une contrainte de tension dont l'intensité varie périodiquement autour de la valeur de la pré-contrainte et qui possède une amplitude de façon à toujours maintenir le revêtement sous tension.

2. Procédé selon la revendication 1, **caractérisé en ce que** l'amplitude de variation de ladite intensité est telle que le revêtement (10) est toujours maintenu sous une contrainte de tension qui est dans les limites de la région viscoélastique linéaire de la matière du revêtement (10).
